(19) **Europäisches Patentamt**

**European Patent Office**

**Office européen des brevets**

(11) **EP 0 919 943 B1**

(12) **EUROPEAN PATENT SPECIFICATION**

(45) Date of publication and mention
of the grant of the patent:
**16.07.2003  Bulletin 2003/29**

(51) Int Cl.⁷: **G06K 7/00**

(21) Application number: **97120860.8**

(22) Date of filing: **27.11.1997**

(54) **A transponder system**

Ein Transpondersystem

Système de répondeur

(84) Designated Contracting States:
**DE FR GB IT NL**

(43) Date of publication of application:
**02.06.1999  Bulletin 1999/22**

(73) Proprietor: **TEXAS INSTRUMENTS
DEUTSCHLAND GMBH
85356 Freising (DE)**

(72) Inventors:
• **Aslanidis, Konstantin O.
85221 Dachau (DE)**
• **Meier, Herbert
85368 Moosburg (DE)**
• **Hagl, Andreas
85221 Dachau (DE)**

(74) Representative:
**Degwert, Hartmut, Dipl.-Phys. et al
Prinz & Partner GbR,
Manzingerweg 7
81241 München (DE)**

(56) References cited:
**EP-A- 0 768 540          GB-A- 2 259 227
US-A- 5 453 747**

EP 0 919 943 B1

**Description**

FIELD OF THE INVENTION

The invention relates to a transponder system and method of operation thereof and, more particularly, to a system for preventing message signal collision of multiple wireless transponders in a wireless interrogation field from interfering with identification of the respective transponder messages, i.e., their so-called telegrams. Accordingly, the proposed transponder collision avoidance system avoids telegram collision with attendant advantages.

Self-contained, miniaturized transponders, i.e., radio transponders, are known that employ an interrogator-transponder arrangement which may be independently powered, e.g., having an EEPROM data storage device and a transponder charge capacitor used as an energy accumulator charged by the energy of radio frequency interrogation to thereby power the transponder. Such a transponder arrangement is disclosed in Schuermann et al. U.S. Patent 5,053,774.

Such transponders each transmit their radio telegrams upon being interrogated by a so-called reader. The wireless transmission of a transponder, e.g., as may convey serial number or address and any of a variety of parameters such as temperature or pressure, or other data, may herein be termed a telegram.

In a system employing multiple such transponders which may be miniaturized, independent, low cost and of relative simplicity, the transponders are not able to communicate with each other to avoid interference so that collision of their respective so-called telegrams may result, such that it may be impossible for the reader to distinguish their respective telegrams. Such a problem may arise when, after the interrogation signal of the reader, the transponders all initiate their telegram at the same time. Thus, it is desired to allow the transponders in the interrogation field to transmit their respective telegrams successively without mutual interference and without excessive loss of time.

Multiple possible solutions may exist to overcome the collision problem. One such proposed solution uses a comparison between a selective address and the content of a transponder memory to avoid response of an unaddressed transponder, in which transponder the charge capacitor is discharged and therefore oscillation is stopped before the transponder can transmit. A disadvantage in the latter approach is that each transponder must be addressed separately, which requires considerable time and so degrades throughput; and moreover the respective transponder addresses must be completely known so that only a preselected transponder will be caused to respond.

A transponder system wherein different responder exciter signals are transmitted sequentially from a reader is known from EP-A-0 768 540. That document discloses a transponder system including a reader which may interrogate and receive responses from a variety of transponders operating in full or half duplex and using different protocols. Each exciter signal can be characterized by a signal having a selected frequency, duration, or amplitude and which may be modulated in amplitude, phase or frequency. Exciter signal characteristics are chosen based on the design and operating characteristics of its associated transponder.

SUMMARY OF THE INVENTION

It is in view of the above problems that the present invention is proposed. The present invention contemplates initiating in the multiple transponders a predetermined transmission delay interval for the respective transponder so that the data telegrams of the multiple transponders provide transmission of telegrams successively without mutual interference and without excessive loss of time.

Among the several advantages and features of the invention may be noted the provision of an improved transponder anti-collision system which is suitable for either half-duplex (HDX) transponder systems or full-duplex (FDX) transponder systems using any type of modulation.

As a further advantage, the reader of such a system can be compatible with the existing installations, so that a reader configured according to the present system proposal can read existing transponders as well as transponders configured according to the present system proposal for avoiding interrogation telegram collision.

A still further advantage is that transponders of the system are readily configured in accordance with the proposed system, requiring only simple circuit additions to existing transponder circuitry to achieve the modes of operation herein proposed.

Briefly, an inventive transponder signal collision avoidance system comprises the features of claim 1.

In addition, there is provided a method of wireless reader-transponder operation as defined in claim 11.

Other advantages, objects and features will be apparent or are pointed out herein.

BRIEF DESCRIPTION OF DRAWINGS

The present invention will now be further described, by way of example, with refernce to the accompanying drawings in which:

FIG. 1 is a block diagram operation of a system in accordance with the invention;

FIG. 2 is a block diagram of the configuration of an HDX transponder as modified in accordance with the invention to provide the proposed collision-avoidance mode of operation;

FIG. 3 is a block diagram of the configuration of an FDX transponder as modified in accordance with the invention to provide the proposed collision-avoidance mode of operation;

FIGS. 4A and 4B are interrelated flow charts together showing steps in the operation of a reader and typical transponder of the system, wherein:

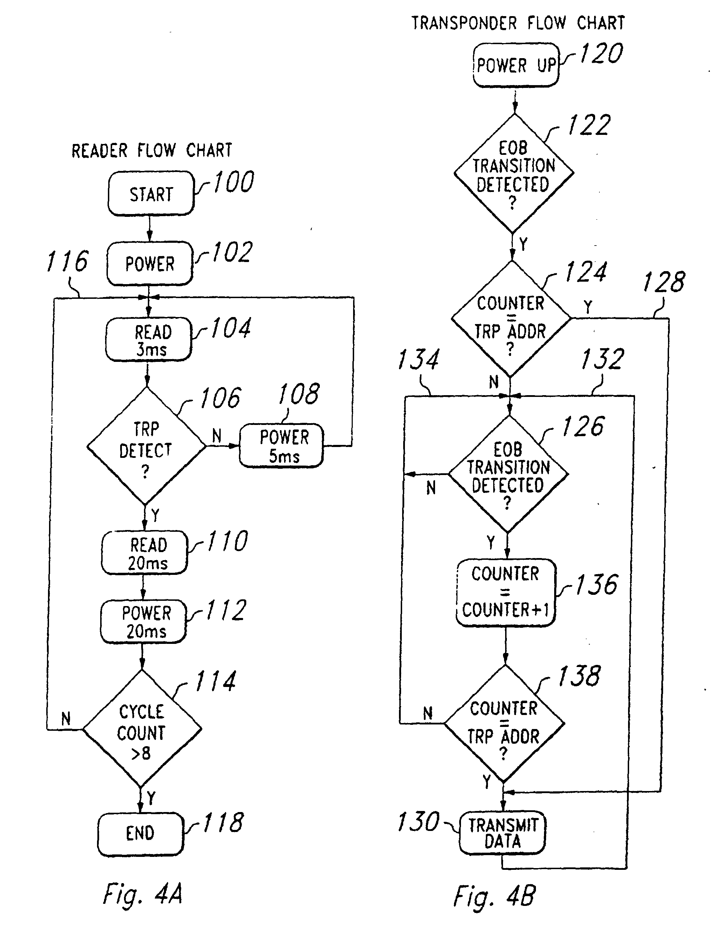

FIG. 4A is termed the reader flow chart and shows steps in the operation of a reader of the system operating according to system requirements; and

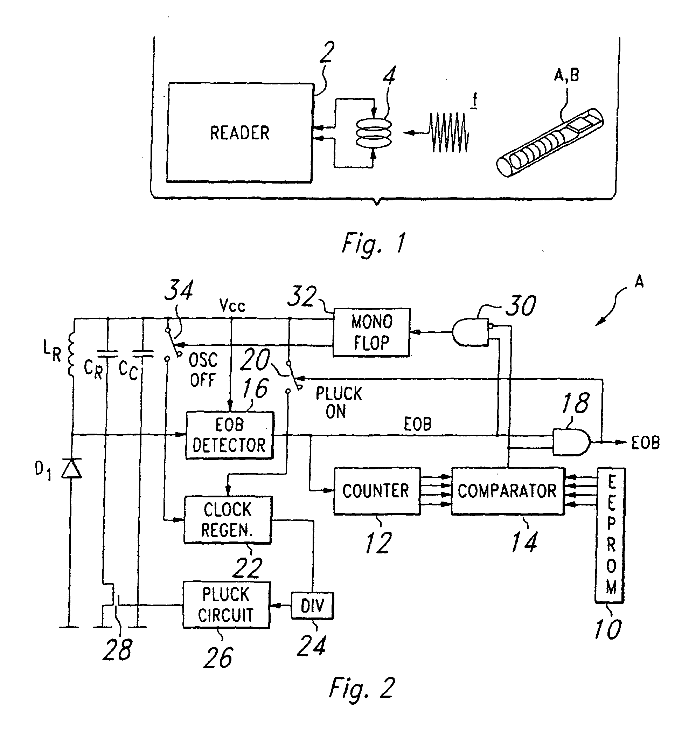

FIG. 4B is termed the transponder flow chart and shows steps in the operation of a typical transponder configured according to FIG. 2;

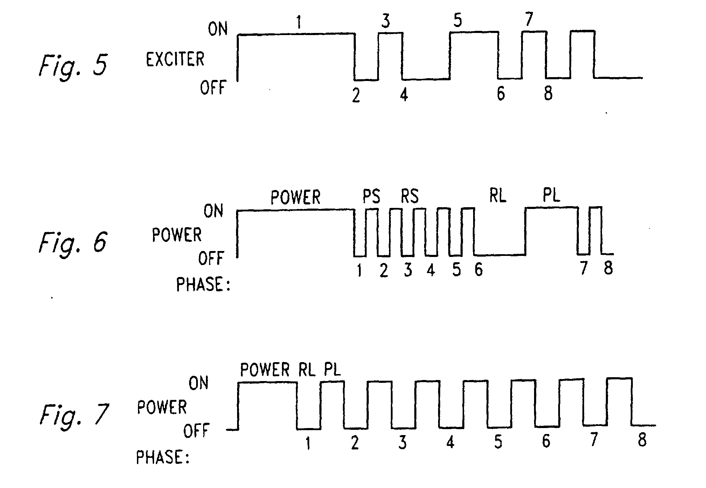

FIG. 5 is an exemplary reader timing diagram;

FIG. 6 is a timing diagram with conditions indicative of a number of transponders to be detected, only one transponder being present within the interrogation field; and

FIG. 7 is a timing diagram with conditions indicative of the same number of transponders to be detected, all of a maximum number of transponders being present, as the system is adjusted according to a desired embodiment.

Corresponding reference characters identify corresponding elements throughout the several views of the drawings.

DESCRIPTION OF INVENTIVE EMBODIMENTS

Referring to the drawings, FIG. 1 shows a block diagram of a wireless interrogation system of the half-duplex (HDX) type generally disclosed in above-cited Schuermann et al. U.S. Patent 5,053,774 including an interrogator-reader (reader) 2 and its antenna 4 by which one miniaturized transponder A,B as typical of others in field $\underline{f}$ is interrogated by reader 2 and FSK-modulated data may be read from the transponder by the reader according to known technique, with the transponder powered by RF from antenna 4.

Referring to FIG. 2, an HDX transponder A includes a resonant circuit comprising an inductor $L_R$ and a capacitor $C_R$ for both receiving an interrogation signal and for transmitting a response. Inductor $L_R$, being of very compact dimensions, serves as an antenna of the transponder for receiving and transmitting.

Transponder A is representative of each of several transponders $A_1$, $A_2$ . . . $A_n$ in field $\underline{f}$ to be interrogated by an interrogator, i.e., a reader (not shown) in accordance with the teachings of Patent 5,053,774. It will be understood that each of the transponders in a wireless interrogation field carries a unique identification, namely a unique bit pattern constituting a preset value, as representing the "address" of the respective transponder. By such addresses, the transponders and reader are prevented from interfering with identification of the respective transponder messages, (i.e., their so-called telegrams,) by transmitting only if the address is received and thereby preventing transponder telegram collision.

When interrogated, each transponder, being provided with a diode $D_1$ clamping one side of the resonant circuit to circuit ground, stores charge in a charge capacitor $C_C$ from received radio frequency energy for so long as the interrogation signal is received, e.g., for a period of milliseconds. As will be seen from the following description the resultant charge in capacitor $C_c$ provides the sole source of power for operation of the transponder, and represents a stored voltage Vcc.

Transponder A also includes an EEPROM 10 containing a unique bit pattern, herein referred to as a preset value, and meaning a number of predetermined EEPROM bits representing the address of the transponder, and in accordance with the invention provides a counter 12 for counting reader power pulses, the counter increasing a predetermined value (bit pattern), and storing this count value for a period of one read cycle. It will be compared with the preset value, namely the transponder address, of the EEPROM by a comparator 14.

As will be known to those skilled in the art, in such HDX wireless mode both interrogation transmission and transponder response will be carried out sequentially, typically on the same frequency. Accordingly, circuit provision is made within each transponder for determining the end of each transmission burst by the reader. Specifically, at 16 is designated an end-of-burst (EOB) detector, powered by Vcc, that is responsive to H-L (high-to-low) transition of the received burst during an interrogation cycle and upon H-L power transition generates an EOB trigger signal to counter 12 and also to an AND gate 18. If the latter receives a match signal from comparator 14, the AND gate will provide an end-of-burst (EOB) signal to a semiconductor switch 20, as realized in integrated circuitry of the apparatus, so as to provide Vcc to an clock regenerator circuit 22 of the apparatus. The latter circuit then provides an output to a clock divider 24 which is configured accordingly to drive a pluck circuit 26, in turn driving a unijunction transistor or other suitable semiconductor switch 28 having its main electrodes between circuit ground and the resonant circuit, and thus, as gated "ON" or "OFF", causing resonance to be initiated and with transmission accordingly responsive to interrogation. Data as characteristic of that stored permanently or temporarily in EEPROM 10 also may be clocked out during transmission.

Provision is included for preventing transmission if the transmitted bit pattern, namely a transponder sequence value of the interrogation signal, does not match the preset value of the EEPROM when compared by comparator 14. When the value does not match, as in the case of each of the transponders of the set except that being interrogated, a further AND gate 30 receiving as one input EOB and having its other input inverted and receiving the output of comparator 14, so that the output of gate 30 is high in the absence of a match. The high output triggers a monoflop 32 to provide an oscillation-off signal OSCOFF to another semiconductor switch 34 for interrupting operation of clock regenerator 22 to effectively short circuit the resonant circuit and stop further oscillation, inactivating the pluck circuit 26.

Modification of an existing HDX transponder configuration of the system includes the augmentation of counter 12, comparator 14 gates 18 and 30, and monoflop 32 and adaption of these elements to the circuitry with resultant new combination of features and new modes of operation.

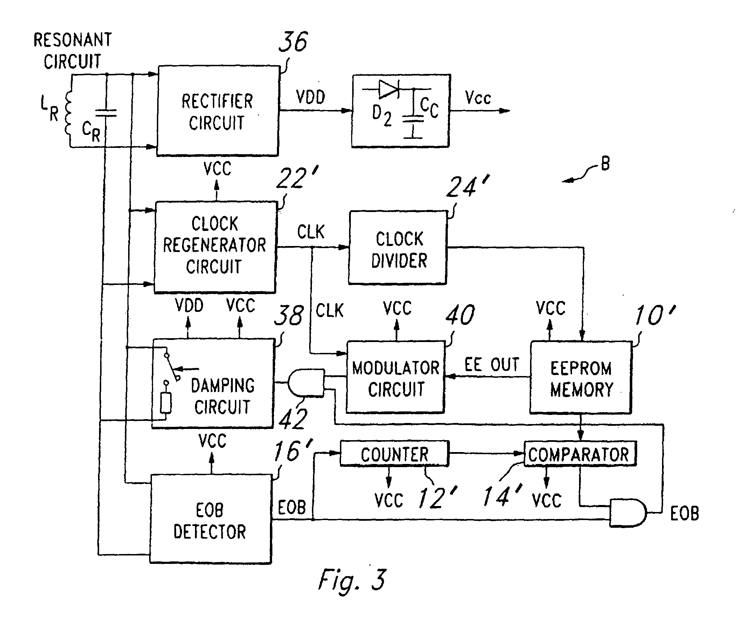

Referring to FIG. 3, a full-duplex (FDX) transponder generally of the type identified above, here designated B, similarly includes a resonant circuit having an inductor $L_R$ and a capacitor $C_R$ for both receiving an interrogation signal and for transmitting a response. Transponder B is similarly one of a plurality intended to be interrogated by a reader (not shown).

Those skilled in the art understand that full-duplex wireless mode of operation may permit the reader and the transponders to operate on different frequencies to permit interrogation transmission and transponder response to occur on the different frequencies and wherein a transponder may receive interrogation on one frequency by means of its resonant circuit which then may be electronically retuned for interrogation response transmission to the reader.

The resonant circuit is in any event connected across a rectifier circuit 36 providing a voltage $V_{DD}$ at resonance through a diode $D_2$ for accumulating charge in charge capacitor $C_c$ from received radio frequency energy which thereby supplies voltage Vcc for operation.

Connected also across the resonant circuit are EOB detector 16', clock regenerator circuit 22' and a damping circuit 38.

Clock regenerator circuit 22' provides a clock signal CLK to clock divider 24' and also to a modulator circuit 40. The clock divider provides its output to EEPROM 10.

Counter 12' stores a bit pattern corresponding to the number of reader power pulses of the interrogation signal, providing a stored count value. Comparator 14' compares the count value in counter 12' with the address value of EEPROM 10'. If there is a match, an output is provided by the comparator to AND gate 18', whose output EOB* is provided to an input of a further AND gate 42 which receives its other input from modulator 40 which in turns receives the data output EEOUT of EEPROM 10'.

Modification of such system's FDX transponder configuration to bring about the new combination of features and new modes of operation includes the augmentation and adaption of counter 12', comparator 14', gates 18' and 42.

The system, whether HDX or FDX in operation, may consist of at least a reader and a plurality of possible transponders. The system is configured so that the reader is able to read, e.g., 2, 4, 8 or 16 transponders which are all in the same interrogation field. Thus the system necessarily provides, e.g., for 1-, 2-, 3- or 4-bit resolution, respectively, in the addresses, (i.e., identities of its transponders).

Referring to FIG. 5, operation will be better understood.

The reader starts with a power-up sequence (e.g., 50ms) during which all transponders are charged up (i.e., their charge capacitors $C_c$ accumulate charge) and are then ready to transmit their data (FIG. 5 phase 1).

In each transmitter, the outputs of counter 12 are connected to bit comparator 14. Each transponder counter is increased by a count of 1 after the high-low (H-L) transition (except the first transition). If after the first H-L transition one of the transponders has the same bit pattern (meaning that the value in its counter 12 matches the increased comparator value (a condition referred to herein as a match), an EOB signal will be generated in response to the detected end-of-burst to trigger the transponder circuit in accordance with the previous description. The circuit thus triggers the oscillation of resonant circuit comprising inductor $L_R$ and capacitor $C_R$, by activation of pluck circuit 26, so that transponder starts the transmission process, as powered by the energy accumulated in $C_c$.

The other transponders wherein the value does not match stop their oscillation as signalled by OSCOFF to effectively short circuit the resonant circuit of each such other transponder wherein the respective pluck circuit is accordingly not activated. Such other transponders thus remain passive, but the supply voltage Vcc remains stored in charge capacitor $C_c$ of each transponder.

If, however, there is no transponder with the same value as sent by the reader, and thus no transponder comparator detects a match, all transponders remain in a stand-by mode as no conditions exist in any transponder to trigger oscillation by the transponder.

During a third phase (3,7) shown in Fig. 5 all transponders are recharged. The H-L transitions 3 to 4, 5 to 6, 7 to 8 each generate a new clock pulse to increase the respective counter's value.

Referring to FIG. 4A, showing steps/sequences of operation as a reader flow diagram, there is first shown a start 100, and from operation proceeds to power step 102, and thereafter a short transponder read step 104 of, e.g., 3ms duration, during which it will be understood that by reading, the reader is in a receiving mode in which it listens for any transmission from a transponder. A query 106 follows in which the reader determines if any transponder is detected, and thus may be referred to as checking to see if a transponder is detected. If a transponder response is not detected (N), a short power step 108 of, e.g., 5ms ensues, followed by transponder read step 104 again. If a transponder response is detected (Y), a longer read step 110 of, e.g., 20ms provides for transponder reading of data from the transmitting transponder. Then a still longer power step is provided for, e.g., 20ms as shown at step 112. The cycle count is then queried at 114. If the cycle count is not (N) greater than a value of 8, e.g., as being the predetermined number of transponders to be read, the process loops back as indicated at 116 to step 104 for another cycle. If the cycle count is (Y) greater than a value of 8, the sequence of steps is terminated as shown at end 118. Thus, it will be apparent that if no transponder is detected, the reader will be successively cycled only through steps 102, 104 and 106 in sequence, namely powering, reading and checking, or may be carried out selectively as steps 100, 102, 104 and 106 on an predetermined basis.

FIG. 4B shows corresponding steps at a transponder. A power-up period is shown as step 120 during which the charge capacitor $C_c$ charges up to provide voltage Vcc. If then at step 122 an EOB signal is detected, operation continues to the determination as represented by step 124 of whether the counter has a count value equal to that corresponding to the transponder address. If not (N), operation proceeds to determining again at decision block 126 whether there is an EOB transition detected. But if yes (Y), the counter has a count value equal to that corresponding to the transponder address, operation proceeds as indicated at 128 to a sequence 130 of transmitting the transponder data to the reader, whereupon the flow then proceeds as indicated at 132 back to query 126 to determine whether there is an EOB transition detected. If not (N), operation is redirected and another query 126 is made. But if yes (Y), operation proceeds from query 126 to step 136 in which counter 12 is incremented by a value of 1 (COUNTER=COUNTER + 1). The sequence of operation then queries at 138 whether the counter value equals that corresponding to the transponder address. If not (N), operation is redirected by path 134 to checking again at decision block 126 whether an EOB is detected. If yes (Y), operation proceeds once more to transmit data sequence 130.

Thus, comparing FIGS. 4A and 4B with FIG. 5, it will be understood with reference to FIG. 5 that at phase 1 all transponders are charged up and the reader is ready to receive the transponder telegrams at phase 2. If after a short read period of, e.g., 2-3ms no signal is detected the reader transmitter starts to power again for a short power step for a period, e.g., 5-10ms to recharge all transponders in the interrogation field (phase 3). In phase 4 the reader has detected a transponder signal within a 2-3ms brief read step or segment and thus extends the receive phase to 20ms. After such an extended receive period or sequence a longer charge up time is necessary by providing an extended power period (e.g., 10-20ms), as shown in phase 5. The reader continues to power and read, through power and read steps, until the predetermined number of transponders (with corresponding interrogation read cycles) has been reached. Such may for example be 8 or 16 read cycles.

Because system speed is lowered by a greater number of transponders to be interrogated (speed being dependent on the number of the transponders to be detected), the present solution to transponder collision avoidance will be found suitable for specific applications and not all applications. It is to be further appreciated that resolution is dependent on the number of used bits.

It is noted that in the special case of two transponders in the interrogation field having the same bit pattern, the reader can recognize this occurrence because there will be a field generated by the transponders but not a valid read.

The examples appearing on following pages are illustrative. They indicate exemplary timing sequences considered to be appropriate for conditions of different possible numbers of transponders in the interrogation field. Those skilled in the art may vary timing of steps and sequences to achieve the results of the invention.

Example 1

Referring to FIG. 6, the timing diagram illustrates timing conditions typical where there are, in this example, 8 transponders to be detected but only one transponder is present. The following table illustrates typical sequences and their lengths:

(Table 1)
Read Short (RS)=3ms
Read Long (RL)=20ms
Power Short (PS)=5ms
Power Long (PL)=20ms
POWER=50ms

As accordingly evident from FIG. 6, the sequence of operation proceeds through a power phase of 50ms and then through a total of 8 subsequent phases, and where in phase 6 RL includes reading of the sixth of 8 transponders, and is followed by PL. The total period T is thus defined by

$$T=POWER+RS^+3+PS^+5+RL+PL \qquad \text{(Equation 1a)}$$

so that

$$T=50ms+7^+3ms+6^+5ms+20ms+20ms=141ms \qquad \text{(Equation 1b)}$$

Example 2

Referring to FIG. 7, the timing diagram illustrates timing conditions typical where there are, in this example, 8 transponders to be detected and all 8 transponders are present.
The total period T is this case similarly

$$T=POWER+8^+RL+7^+PL \qquad \text{(Equation 2a)}$$

whereby

$$T=50ms+8^+20ms+7^+20ms=350ms \qquad \text{(Equation 2b)}$$

Example 3

Similarly, in the event of 16 transponders to be detected and all 16 transponders being present, the total period T is

$$T=POWER+16^+RL+15^+PL \qquad \text{(Equation 3a)}$$

such that

$$T=50ms+16^+20ms+15^+20ms=670ms \qquad \text{(Equation 3b)}$$

and the sequence of phases will be evident from the pattern generally given by FIG. 7.
The inventive new system is thus seen to achieve substantial advantages in a HDX and FDX type system for preventing message signal collision of multiple wireless transponders in a wireless interrogation field from interfering with identification of the respective transponder messages, (i.e., their so-called telegrams). The transponder collision avoidance system avoids telegram collision with attendant advantages. It involves convenient modification of an existing HDX or FDX-type reader without departing from the existing reader principles of operation except as will be within the province of the skilled artisan to sequence the additional steps, but it still is compatible with existing installations and so achieves desirable backward compatibility with legacy suitability. This also means the modified reader can read existing transponders. As a further advantage, existing transponder designs are readily modified as evident from the foregoing whether for HDX transponder (FIG. 2) or FDX transponder (FIG. 3) configurations, and transponder data can be transmitted reliably to the reader as by using system typical modulation.

In view of the foregoing description of the present invention and various embodiments and methods it will be seen that the several objects of the invention are achieved and other advantages are attained.

The embodiments were chosen and described in order to best explain the principles of the invention and its practical application to thereby enable others skilled in the art to best utilize the invention in various embodiments and with various modifications as are suited to the particular use contemplated.

## Claims

1. A transponder system for signal collision avoidance comprising a reader (2) and a plurality of wireless transponders (A, B) for being interrogated by the reader within a wireless interrogation field, the reader being adapted to interrogate by transmitting power pulses through a number of cycles corresponding to a number of possible transponders in the field, the cycles corresponding to the addresses of each of respective possible transponders, the transponders each being adapted to respond to the reader by transmission only in response to a count of said power pulses determined by the transponders as corresponding to the address of the respective transponder, whereby the transponders transmit respective messages without interfering with each other.

2. A transponder system as set forth in claim 1, wherein each transponder comprises a counter (12, 12') for counting the number of power pulses transmitted by the reader and storing a count value, and circuitry (10, 14; 10'; 14') for determining if the stored count value identifies the respective transponder, and circuitry (30, 32, 34) for preventing transmission by the respective transponder if the stored count value does not identify the respective transponder.

3. A transponder system as set forth in claim 2, wherein the circuitry for determining if the stored count value identifies the respective transponder comprises a memory (10, 10') for storing a preset address value representing the address of the transponder and a comparator (14, 14') for comparing the stored count value with the preset address value.

4. A transponder system as set forth in claim 3 wherein the circuitry for preventing transmission by the respective transponder if the stored count value does not identify the respective transponder comprises logic circuitry (30, 32) responsive to the comparator (14) for terminating transmission by the respective transponder.

5. A transponder system as set forth in claim 4 wherein each transponder comprises a charge capacitor ($C_c$) in which received frequency energy is stored when an interrogation signal is received from the reader, the resultant charge in the charge capacitor powering the transponder for operation, the logic circuitry responsive to the comparator for terminating transmission by the respective transponder preventing oscillation powered by the charge capacitor.

6. A transponder system as set forth in claim 4 or claim 5, wherein the logic circuitry comprises a monoflop (32) controlling the transmission status of the transponder in response to the comparator (14).

7. A transponder system as set forth in claim 6 wherein the transponder includes an end-of-burst detector (16) for determining the end of a received power pulse and providing an end-of-burst signal for incrementing the count value stored by the counter (12) upon end-of-burst detections, the comparator (12) providing a comparison match output if the count value matches the preset address value, and wherein the logic circuitry comprises a first logic gate (30) for controlling the toggling of the monoflop (32) as a function of a comparison mis-match output and the end-of-burst signal.

8. A transponder system as set forth in any preceding claim, wherein the system provides half-duplex operation.

9. A transponder system as set forth in any of claims 1 to 7 wherein the system provides full-duplex operation.

10. A transponder system as set forth in any preceding claim, wherein the respective transponders provide their transmissions successively.

11. A method of wireless reader-transponder operation for interrogating possible transponders (A, B) in a wireless field by the use of a reader (2) and controlling respective ones of the transponders such as to avoid signal collision of transmissions from the respective transponders when interrogated by the reader, comprising operating the reader (2) to interrogate by transmitting (108, 112) power pulses through a number of cycles corresponding to a number of possible transponders in the field, the cycles corresponding to the addresses of each of respective possible transponders, and selectively permitting the respective transponders to respond to the reader by transmitting (130) only in response to a count of said power pulses corresponding to the address of the respective transponder, whereby transponders in the field transmit respective messages sequentially without interfering with each other.

12. The method as set forth in claim 11 further comprising; storing in each transponder an address value uniquely characteristic of the respective transponder, receiving and storing as a count value the number of received power pulses while transmissions are received by the transponder from the reader and comparing the count value during interrogation with the address value for determining if the stored count value identifies the respective transponder, and preventing transmission by the respective transponder if the stored count value does not identify the respective transponder.

13. The method as set forth in claim 12, further comprising; storing in a charge capacitor ($C_c$) of each transponder received radio frequency energy provided during said reader power pulses for powering the respective transponder when an interrogation signal is received from the reader.

14. The method as set forth in claim 12 or claim 13 further comprising preventing transmission by the respective transponder if the stored count value does not identify the respective transponder.

15. The method as set forth in any of claims 12 to 14, wherein in each transponder the step of comparing the stored count value during interrogation with the address value for determining if the stored count value identifies the respective transmitter provides a match signal if the stored count value identifies the respective transmitter, and further comprising detecting (122, 126) in each transponder and end-of-burst of transmission by the reader and signalling same by an and-of-burst signal, initiating a transmission by the transponder upon the presence of both end-of-burst and match signals, and preventing transmission oscillation by the respective transponder if there is an end-of-burst signal without a corresponding match signal.

16. The method as set forth in any of claims 13 to 15, wherein the step of operating the reader comprises providing cycles of operation having a first power step (102) sending a transponder power-up signal, and a first read step (104) for reading responses from any of the transponders, determining (106) if any transponder response is detected, and then again re-initiating as a new cycle another power step (108) if no response is detected, and subsequently reading (104) responses from any transponder, but if a transponder response is detected extending the cycle by providing a read step (110) longer than the first read step for transponder reading, again providing a further power step (112), counting (114) cycle count to determine a cycle count, repeating the cycle until as many cycles are completed as correspond to the number of possible transponders.

17. The method as set forth in claim 16 further comprising; providing an elongated read period for reading of data during transmission of a transponder during an interrogation cycle in which the respective transponder provides a match signal if the stored count value identifies the respective transponder and during which read period data is provided from the respective transponder to the reader.

18. The method as set forth in claim 16 or 17 further comprising providing an elongated power period by the reader following the elongated read period.

19. The method as set forth in any of claims 11 - 18, wherein the transponders operate in either half-duplex or full-duplex mode.

**Patentansprüche**

1. Transpondersystem zur Vermeidung von Signalkollisionen, mit einem Leser (2) und mehreren drahtlosen Transpondern (A, B), die durch den Leser in einem drahtlosen Abfragefeld abgefragt werden können, wobei der Leser so beschaffen ist, daß er durch Senden von Energieimpulsen während einer Anzahl von Zyklen, die einer Anzahl möglicher Transponder in dem Feld entspricht, abfragt, wobei die Zyklen den Adressen jedes der jeweils möglichen Transponder entsprechen, wobei die Transponder jeweils so beschaffen sind, daß sie dem Leser antworten, indem sie nur in Reaktion darauf, daß ein von den Transpondern bestimmter Zählstand der Energieimpulse der Adresse des jeweiligen Transponders entspricht, senden, wobei die Transponder jeweilige Nachrichten senden, die sich nicht gegenseitig stören.

2. Transpondersystem nach Anspruch 1, bei dem jeder Transponder einen Zähler (12, 12') zum Zählen der Anzahl der von dem Leser gesendeten Energieimpulse und zum Speichern eines Zählwerts sowie eine Schaltungsanordnung (10, 14; 10', 14'), die feststellt, ob der gespeicherte Zählwert den jeweiligen Transponder identifiziert, und eine Schaltungsanordnung (30, 32, 34), die ein Senden durch den jeweiligen Transponder verhindert, falls der gespeicherte Zählwert den jeweiligen Transponder nicht identifiziert, umfaßt.

3. Transpondersystem nach Anspruch 2, bei dem die Schaltungsanordnung, die feststellt, ob der gespeicherte Zählwert den jeweiligen Transponder identifiziert, einen Speicher (10, 10') zum Speichern eines im voraus festgelegten Adressenwerts, der die Adresse des Transponders repräsentiert, und einen Komparator (14, 14'), der den gespeicherten Zählwert mit dem im voraus festgelegten Adressenwert vergleicht, umfaßt.

4. Transpondersystem nach Anspruch 3, bei dem die Schaltungsanordnung, die das Senden durch den jeweiligen Transponder verhindert, falls der gespeicherte Zählwert den jeweiligen Transponder nicht identifiziert, eine Logikschaltungsanordnung (30, 32) umfaßt, die in Reaktion auf den Komparator (14) das Senden durch den jeweiligen Transponder beendet.

5. Transpondersystem nach Anspruch 4, bei dem jeder Transponder einen Ladungskondensator ($C_C$) umfaßt, in dem empfangene Frequenzenergie gespeichert wird, wenn vom Leser ein Abfragesignal empfangen wird, wobei die in dem Ladungskondensator sich ergebende Ladung den Transponder für seinen Betrieb mit Energie versorgt, wobei die Logikschaltungsanordnung, die in Reaktion auf den Komparator das Senden durch den jeweiligen Transponder beendet, Oszillationen, für die durch den Ladungskondensator die Energie geliefert wird, verhindert.

6. Transpondersystem nach Anspruch 4 oder Anspruch 5, bei dem die Logikschaltungsanordnung einen Monoflop (32) umfaßt, der in Reaktion auf den Komparator (14) den Übertragungsstatus des Transponders steuert.

7. Transpondersystem nach Anspruch 6, wobei der Transponder einen Burstende-Detektor (16) umfaßt, der das Ende eines empfangenen Energieimpulses bestimmt und ein Burstende-Signal zum Inkrementieren des vom Zähler (12) gespeicherten Zählwerts bei Erfassungen eines Burstendes bereitstellt, wobei der Komparator (12) ein Vergleichsübereinstimmungs-Ausgangssignal bereitstellt, falls der Zählwert mit dem im voraus festgelegten Adressenwert übereinstimmt, und wobei die Logikschaltungsanordnung ein erstes Logikgatter (30) umfaßt, das das Kippen des Monoflops (32) in Abhängigkeit von einem Vergleichsnichtübereinstimmungs-Ausgangssignal und von dem Burstende-Signal steuert.

8. Transpondersystem nach einem vorhergehenden Anspruch, wobei das System eine Halbduplex-Operation bereitstellt.

9. Transpondersystem nach einem der Ansprüche 1 bis 7, wobei das System eine Vollduplex-Operation bereitstellt.

10. Transpondersystem nach einem vorhergehenden Anspruch, bei dem die jeweiligen Transponder ihre Sendevorgänge nacheinander ausführen.

11. Verfahren für drahtlose Leser-Transponder-Operation zum Abfragen möglicher Transponder (A, B) in einem drahtlosen Feld unter Verwendung eines Lesers (2) und zum Steuern entsprechender der Transponder, um so eine Signalkollision von Übertragungen von den jeweiligen Transpondern, wenn diese durch den Leser abgefragt werden, zu vermeiden, umfassend das Betreiben des Lesers (2), damit er durch Senden (108, 112) Energieimpulse über eine Anzahl von Zyklen, die einer Anzahl möglicher Transponder in dem Feld entspricht, abfragt, wobei die Zyklen den Adressen jedes der jeweils möglichen Transponder entsprechen, und das wahlweise Zulassen, daß die jeweiligen Transponder auf den Leser antworten, indem sie nur in Reaktion darauf, daß ein Zählstand der Energieimpulse der Adresse des jeweiligen Transponders entspricht, senden (130), wobei Transponder in dem Feld jeweilige Nachrichten nacheinander senden, ohne daß sie sich gegenseitig stören.

12. Verfahren nach Anspruch 11, das ferner umfaßt: Speichern eines Adressenwertes in jedem Transponder, der für den jeweiligen Transponder eindeutig charakteristisch ist, Empfangen und Speichern der Anzahl empfangener Energieimpulse als einen Zählwert, wenn Übertragungen von dem Leser durch den Transponder empfangen werden, und Vergleichen des Zählwerts während des Abfragens mit dem Adressenwert, um festzustellen, ob der gespeicherte Zählwert den jeweiligen Transponder identifiziert, und Verhindern einer Übertragung durch den jeweiligen Transponder, falls der gespeicherte Zählwert nicht den jeweiligen Transponder identifiziert.

13. Verfahren nach Anspruch 12, das ferner umfaßt: Speichern empfangener Hochfrequenzenergie, die während der Leser-Energieimpulse bereitgestellt werden, in einem Ladungskondensator ($C_c$) jedes Transponders, um den jeweiligen Transponder mit Energie zu versorgen, wenn von dem Leser ein Abfragesignal empfangen wird.

14. Verfahren nach Anspruch 12 oder Anspruch 13, das ferner umfaßt: Verhindern einer Übertragung durch den jeweiligen Transponder, falls der gespeicherte Zählwert den jeweiligen Transponder nicht identifiziert.

15. Verfahren nach einem der Ansprüche 12 bis 14, bei dem in jedem Transponder der Schritt des Vergleichens des gespeicherten Zählwerts während des Abfragens mit dem Adressenwert, um festzustellen, ob der gespeicherte Zählwert den jeweiligen Sender identifiziert, ein Übereinstimmungssignal bereitstellt, falls der gespeicherte Zählwert den jeweiligen Sender identifiziert, wobei das Verfahren ferner umfaßt: Erfassen (122, 126) eines Burstendes der Übertragung durch den Leser in jedem Transponder und Melden dieser Tatsache durch ein Burstende-Signal, Beginnen einer Übertragung durch den Transponder bei Vorhandensein sowohl des Burstende- als auch des Übereinstimmungssignals, und Verhindern einer Übertragungsoszillation durch den jeweiligen Transponder, falls ein Burstende-Signal ohne ein entsprechendes Übereinstimmungssignal vorhanden ist.

16. Verfahren nach einem der Ansprüche 13 bis 15, bei dem der Schritt des Betreibens des Lesers umfaßt: Bereitstellen von Operationszyklen mit einem ersten Leistungsschritt (102), indem ein Transponder-Einschaltsignal gesendet wird, und einem ersten Leseschritt (104), in dem Antworten von irgendeinem der Transponder gelesen werden, Feststellen (106), ob irgendeine Transponderantwort erfaßt wird, und dann erneutes Beginnen eines weiteren Leistungsschrittes (108) als einen neuen Zyklus, falls keine Antwort erfaßt wird, und anschließend Lesen (104) von Antworten von irgendeinem Transponder; falls jedoch eine Transponderantwort erfaßt wird, Erweitern des Zyklus durch Vorsehen eines Leseschrittes (110), der länger als der erste Leseschritt zum Lesen eines Transponders ist, erneutes Bereitstellen eines weiteren Leistungsschrittes (112), Zählen (114) des Zykluszählstandes, um einen Zylduszählstand zu bestimmen, und Wiederholen des Zyklus, bis so viele Zyklen abgeschlossen sind, daß sie der Anzahl möglicher Transponder entsprechen.

17. Verfahren nach Anspruch 16, das ferner umfaßt: Vorsehen einer langen Leseperiode zum Lesen von Daten während der Übertragung eines Transponders während eines Abfragezyklus, in dem der jeweilige Transponder ein Übereinstimmungssignal bereitstellt, falls der gespeicherte Zählwert den jeweiligen Transponder identifiziert, und in der Leseperioden-Daten von dem jeweiligen Transponder für den Leser bereitgestellt werden.

18. Verfahren nach Anspruch 16 oder 17, das ferner das Bereitstellen einer langen Leistungsperiode durch den Leser, die der langen Leseperiode folgt, umfaßt.

19. Verfahren nach einem der Ansprüche 11-18, bei dem die Transponder entweder in der Halbduplex- oder in der Vollduplex-Betriebsart arbeiten.

**Revendications**

1. Système de répondeur pour éviter la collision de signaux, comprenant un lecteur (2) et une pluralité de répondeurs sans fil (A, B) qui doivent être interrogés par le lecteur dans un champ d'interrogation sans fil, le lecteur étant à même d'interroger en transmettant des impulsions de courant sur un nombre de cycles correspondant à un nombre de répondeurs éventuels dans le champ, les cycles correspondant aux adresses de chacun des répondeurs éventuels respectifs, les répondeurs étant chacun à même de répondre au lecteur par transmission uniquement en réponse à un comptage desdites impulsions de courant déterminé par les répondeurs comme correspondant à l'adresse du répondeur respectif, les répondeurs transmettant les messages respectifs sans interférer les uns avec les autres.

2. Système dé répondeur selon la revendication 1, dans lequel chaque répondeur comprend un compteur (12, 12') pour compter le nombre d'impulsions de courant transmises par le lecteur et mettre en mémoire une valeur de comptage, et des circuits (10, 14; 10'; 14') pour déterminer si la valeur de comptage mise en mémoire identifie le répondeur respectif, et des circuits (30, 32, 34) pour empêcher la transmission par le répondeur respectif si la valeur de comptage mise en mémoire n'identifie pas le répondeur respectif.

3.  Système de répondeur selon la revendication 2, dans lequel les circuits permettant de déterminer si la valeur de comptage mise en mémoire identifie le répondeur respectif comprennent une mémoire (10, 10') pour mettre en mémoire une valeur d'adresse pré-établie représentant l'adresse du répondeur et un comparateur (14, 14') pour comparer la valeur de comptage mise en mémoire à la valeur d'adresse pré-établie.

4.  Système de répondeur selon la revendication 3, dans lequel les circuits permettant d'empêcher la transmission par le répondeur respectif si la valeur de comptage mise en mémoire n'identifie pas le répondeur respectif comprennent des circuits logiques (30, 32) sensibles au comparateur (14) pour terminer la transmission par le répondeur respectif.

5.  Système de répondeur selon la revendication 4, dans lequel chaque répondeur comprend un condensateur de charge ($C_c$), dans lequel l'énergie de fréquence reçue est mise en mémoire lorsqu'un signal d'interrogation est reçu du lecteur, la charge obtenue dans le condensateur de charge alimentant le répondeur pour le faire fonctionner, les circuits logiques sensibles au comparateur pour terminer la transmission par le répondeur respectif empêchant l'oscillation délivrée par le condensateur de charge.

6.  Système de répondeur selon la revendication 4 ou 5, dans lequel les circuits logiques comprennent un multivibrateur monostable (32) commandant l'état de transmission du répondeur en réponse au comparateur (14).

7.  Système de répondeur selon la revendication 6, dans lequel le répondeur comprend un détecteur de fin de rafale (16) pour déterminer la fin d'une impulsion de courant reçue et délivrer un signal de fin de rafale pour incrémenter la valeur de comptage mise en mémoire par le compteur (12) lors de détections de fin de rafale, le comparateur (12) délivrant une sortie de concordance de comparaison si la valeur de comptage concorde avec la valeur d'adresse pré-établie, et dans lequel les circuits logiques comprennent une première porte logique (30) pour commander la commutation du multivibrafeur monostable (32) en fonction d'une sortie de discordance de comparaison et du signal de fin de rafale.

8.  Système de répondeur selon l'une quelconque des revendications précédentes, dans lequel le système assure un fonctionnement en mi-duplex.

9.  Système de répondeur selon l'une quelconque des revendications 1 à 7, dans lequel le système assure un fonctionnement en duplex intégral.

10. Système de répondeur selon l'une quelconque des revendications précédentes, dans lequel les répondeurs respectifs effectuent leurs transmissions successivement.

11. Procédé de fonctionnement de lecteur-répondeur sans fil pour interroger d'éventuels répondeurs (A, B) dans un champ sans fil en utilisant un lecteur (2) et pour commander certains respectifs des répondeurs de manière à éviter la collision de signaux de transmissions des répondeurs respectifs lorsqu'ils sont interrogés par le lecteur, comprenant les étapes visant à faire fonctionner le lecteur (2) pour interroger en transmettant (108, 112) des impulsions de courant sur un nombre de cycles correspondant à un nombre d'éventuels répondeurs dans le champ, les cycles correspondant aux adresses de chacun des répondeurs éventuels respectifs, et à permettre sélectivement aux répondeurs respectifs de répondre au lecteur en transmettant (130) uniquement en réponse à un comptage desdites impulsions de courant correspondant à l'adresse du répondeur respectif si bien que les répondeurs dans le champ transmettent les messages respectifs en séquence sans interférer les uns avec les autres.

12. Procédé selon la revendication 11, comprenant en outre les étapes visant à mettre en mémoire, dans chaque répondeur, une valeur d'adresse uniquement caractéristique du répondeur respectif, à recevoir et à mettre en mémoire comme valeur de comptage le nombre d'impulsions de courant reçues tandis que des transmissions sont reçues par le répondeur en provenance du lecteur et à comparer la valeur de comptage au cours de l'interrogation à la valeur d'adresse pour déterminer si la valeur de comptage mise en mémoire identifie le répondeur respectif, et à empêcher la transmission par le répondeur respectif si la valeur de comptage mise en mémoire n'identifie pas le répondeur respectif.

13. Procédé selon la revendication 12, comprenant en outre l'étape visant à mettre en mémoire, dans un condensateur de charge ($C_c$) de chaque répondeur, l'énergie de fréquence radio reçue délivrée au cours desdites impulsions de courant du lecteur pour alimenter le répondeur respectif lorsqu'un signal d'interrogation est reçu depuis le lecteur.

**14.** Procédé selon la revendication 12 ou 13, comprenant en outre l'étape visant à empêcher la transmission par le répondeur respectif si la valeur de comptage mise en mémoire n'identifie pas le répondeur respectif.

**15.** Procédé selon l'une quelconque des revendications 12 à 14, dans lequel, dans chaque répondeur, l'étape de comparaison de la valeur de comptage mise en mémoire au cours de l'interrogation avec la valeur d'adresse pour déterminer si la valeur de comptage mise en mémoire identifie l'émetteur-récepteur respectif, délivre un signal de concordance si la valeur de comptage mise en mémoire identifie l'émetteur-récepteur respectif et comprenant en outre la détection (122, 126), dans chaque répondeur, d'une fin de rafale de transmission par le lecteur et la signalisation de celui-ci par un signal de fin de rafale, l'initiation d'une transmission par le répondeur en présence à la fois de signaux de fin de rafale et de signaux de concordance, et l'empêchement de l'oscillation de transmission par le répondeur respectif s'il y a un signal de fin de rafale sans signal de concordance correspondant.

**16.** Procédé selon l'une quelconque des revendications 13 à 15, dans lequel l'étape de fonctionnement du lecteur comprend la mise en oeuvre de cycles de fonctionnement ayant une première étape d'activation (102) envoyant un signal de mise sous tension du répondeur et une première étape de lecture (104) pour lire des réponses d'un quelconque des répondeurs, déterminer (106) si une réponse de répondeur quelconque est détectée, puis réinitialiser, par un nouveau cycle, d'une autre étape d'activation (108) si aucune réponse n'est détectée et ensuite la lecture (104) de réponses d'un répondeur quelconque, mais, si une réponse de répondeur est détectée, l'extension du cycle en mettant en oeuvre une étape de lecture (110) plus longue que la première étape de lecture pour la lecture du répondeur, la mise en oeuvre à nouveau d'une autre étape d'activation (112), le comptage (114) du comptage de cycle pour déterminer un comptage de cycle et la répétition du cycle jusqu'à ce que soient terminés autant de cycles que celui correspondant au nombre de répondeur éventuels.

**17.** Procédé selon la revendication 16, comprenant en outre l'étape de mise en oeuvre d'une période de lecture prolongée pour la lecture de données au cours de la transmission d'un répondeur pendant un cycle d'interrogation, dans lequel le répondeur respectif délivre un signal de concordance si la valeur de comptage mise en mémoire identifie le répondeur respectif et au cours de laquelle des données de période lues sont délivrées par le répondeur respectif au lecteur.

**18.** Procédé selon la revendication 16 ou 17, comprenant en outre la mise en oeuvre d'une période d'activation prolongée par le lecteur après la période de lecture prolongée.

**19.** Procédé selon l'une quelconque des revendications 11 à 18, dans lequel les répondeurs opèrent en mode mi-duplex ou en mode duplex intégral.

Fig. 1

Fig. 2

*Fig. 3*

Fig. 4A

Fig. 4B

Fig. 5

EXCITER

ON

OFF

1    3    5    7

2    4    6    8

Fig. 6

POWER

ON

OFF

PHASE:

POWER    PS  RS        RL    PL

1 2 3 4 5 6              7 8

Fig. 7

POWER

ON

OFF

PHASE:

POWER RL PL

1    2    3    4    5    6    7    8